# EUROPÄISCHE PATENTSCHRIFT

(11) **EP 1 871 937 B1**
(45) Veröffentlichungstag und Bekanntmachung des Hinweises auf die Patenterteilung: **24.10.2012**
(21) Anmeldenummer: 06704084.0
(22) Anmeldetag: 19.01.2006
(51) Int. Cl.: D04H 18/04, D06C 23/00, F16D 1/076

(54) **VORRICHTUNG ZUR MUSTERUNG UND VERFESTIGUNG EINER WARENBAHN MIT AUSTAUSCHBARER MUSTERSCHALE**
DEVICE FOR PATTERNING AND CONSOLIDATING A WEB OF ENDLESS FABRIC WITH AN EXCHANGEABLE PATTERNING SLEEVE
DISPOSITIF POUR CREER UN MOTIF ET POUR CONSOLIDER UNE BANDE DE MATERIAU COMPORTANT UN MANCHON INTERCHANGEABLE AYANT UN MOTIF

(30) Priorität: 18.02.2005 DE 102005007757
(43) Veröffentlichungstag der Anmeldung: 02.01.2008
(73) Patentinhaber: Trützschler Nonwovens GmbH, 63329 Egelsbach (DE)
(72) Erfinder: MÜNSTERMANN, Ulrich, 63329 Egelsbach (DE)
(74) Vertreter: von Kreisler Selting Werner
(86) Internationale Anmeldenummer: PCT/EP2006/000429
(87) Internationale Veröffentlichungsnummer: WO 2006/087064

(56) Entgegenhaltungen:
- EP-A- 1 489 213
- DE-C1- 19 546 203
- US-A- 3 600 735
- US-A- 4 196 496
- US-B2- 6 796 010

## Beschreibung

Die Erfindung bezieht sich auf eine Vorrichtung zur Musterung und Verfestigung eines als Warenbahn ausgebildeten Vlieses aus nicht verwobenen oder verwirkten Fasern mit austauschbarer Musterschale.

Aus der WO 031035955 ist beispielsweise eine Vorrichtung bekannt, mit der dreidimensionale Muster in einem Vlies oder dergleichen erzeugt werden, indem durch ein Musterblech mit Öffnungen, die das Muster bilden, die Fasern geblasen und dann in den Öffnungen ebenfalls verfestigt werden, weil die Fasern dort in den Öffnungen in der Tiefe nur begrenzt verschoben und dann wegen einer zusätzlichen Abstützung ebenfalls vernadelt werden. Die Fasern können mittels der Wasserstrahlen verlagert werden, doch als Medium zur Bewegung der Fasern kann zum Beispiel auch heiße Luft Anwendung finden.

Das Struktur gebende Musterblech wird üblicherweise mit Schrauben radial auf der Bedienseite und der Rückseite an der Wasserstrahlverfestigungstrommel oder allgemein der Trommel befestigt. Das erweist sich als zeitraubend, wenn die Struktur und somit das Musterblech häufig gewechselt werden. Teilweise wird ein solches Musterblech oder allgemeiner eine Musterschale auch pneumatisch mit am Umfang der Trommel eingelassenen Gummischläuchen an Bedienseite und Rückseite der Trommel fixiert. Als Nachteil erweist sich dabei die weiche Art der Fixierung, die eine erhöhte Gefahr der Beschädigung der Gummischläuche beim Vorgang des Auswechselns birgt.

Ausgehend von einer Vorrichtung der oben genannten Art besteht die Aufgabe der Erfindung darin, eine Vorrichtung bereitzustellen, mit der ohne großen Aufwand ein anderes Muster in das Vlies oder dergleichen gezwungen werden kann.

Die Aufgabe wird erfindungsgemäß durch eine Vorrichtung nach Anspruch 1 gelöst.

Die erfindungsgemäße Vorrichtung zur Musterung und Verfestigung eines als Warenbahn ausgebildeten Vlieses umfasst eine Siebtrommel und eine die Siebtrommel von außen umschließende Musterschale, wobei die auf der Musterschale befindlichen Fasern des Vlieses entsprechend dem durch die Löcher der Musterschale gebildeten Muster mittels energiereicher Wasserstrahlen oder auch durch Luftströmung vernadelt und verfestigt werden. Besonderes Kennzeichen der Vorrichtung ist, dass die Musterschale und die Siebtrommel durch schnell lösbare mechanische Mittel miteinander verbunden sind.

Vorteilhafte Ausführungsformen der Vorrichtung sind Gegenstand der Unteransprüche.

In einer bevorzugten Ausgestaltung der Vorrichtung weisen die Siebtrommel und die Musterschale formschlüssig so ineinander greifende Mittel auf, dass eine Verdrehung von Siebtrommel und Musterschale gegeneinander verhindert wird. Insbesondere weisen die Siebtrommel hierfür einen Verzahnungsring und die Musterschale einen Gegenverzahnungsring auf.

In einer weiteren vorteilhaften Ausführungsform sind Befestigungsschrauben an der Vorrichtung so angeordnet, dass eine axiale Verschiebung der Musterschale gegenüber der Siebtrommel verhindert wird.

Die mechanischen Mittel zur Verbindung von Musterschale und Siebtrommel tragen dem Umstand Rechnung, dass große mechanische Kräfte vor allem eine Verdrehung von Musterschale und Siebtrommel gegeneinander hervorrufen können, wohingegen wesentlich geringere Kräfte eine axiale Verschiebung der Musterschale gegenüber der Siebtrommel bewirken könnten. Im Hinblick auf die genannten größeren Kräfte sind deshalb formschlüssige Verbindungen in Form von einrastenden Zähnen vorgesehen, gegenüber den angeführten geringeren Kräften sind stirnseitige Schraubverbindungen ausreichend.

Eine Vorrichtung der erfindungsgemäßen Art wird anhand der Zeichnungen beispielhaft erläutert. Es zeigen
- Fig. 1: im Querschnitt senkrecht zu ihrer Mittelachse eine durchlässige, unter Saugzug stehende Siebtrommel und eine Musterschale zur Herstellung eines gemusterten Vlieses mit zwei der Siebtrommel von außen zugeordneten Düsenbalken,
- Fig. 2: im Längsschnitt durch ihre Mittelachse die Siebtrommel und die Musterschale aus Figur 1,
- Fig. 3: in einer Seitenansicht die Siebtrommel und die daran befestigte Musterschale.

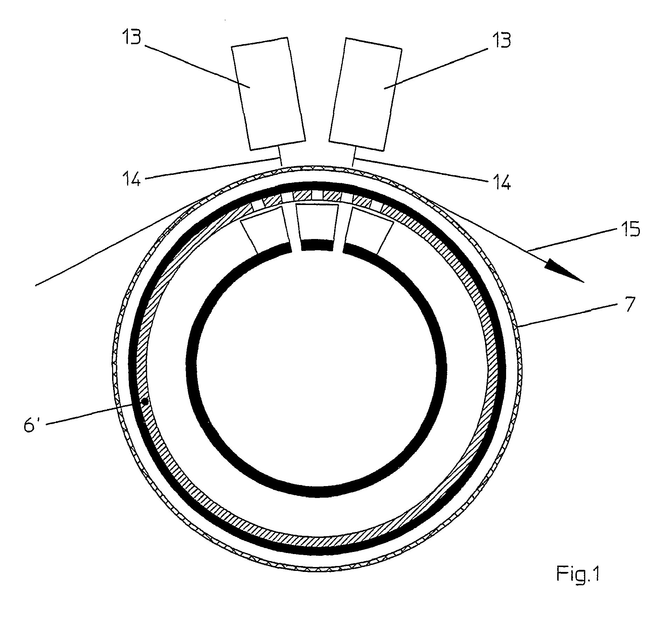

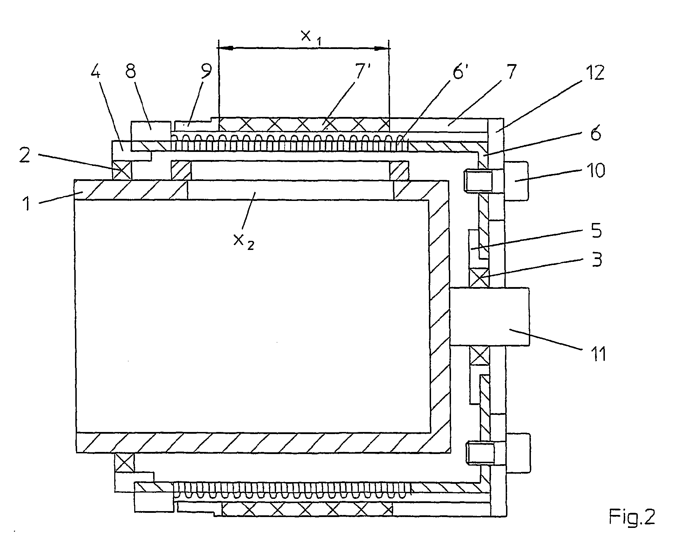

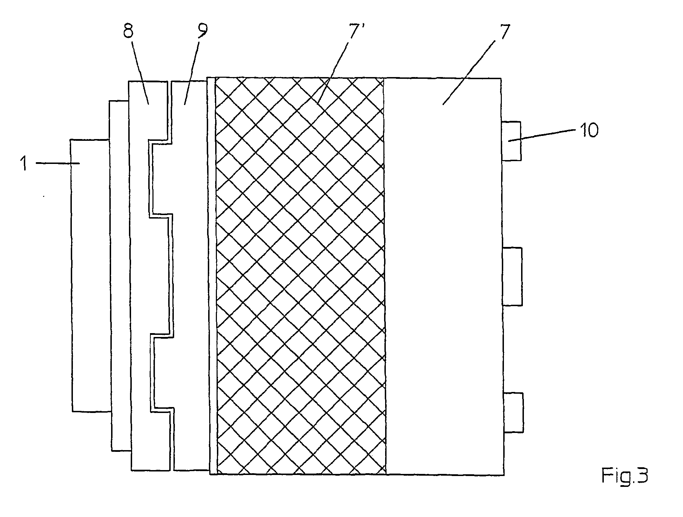

Zu der aus der Figur 1 ersichtlichen Siebtrommel 6 gehören noch weitere Peripherieteile, die aber wegen der Übersichtlichkeit hier fortgelassen sind. Das zu musternde Vlies 15 überläuft unmittelbar die Siebtrommel 1, der außerhalb ein oder mehrere Düsenbalken 13 unmittelbar zugeordnet sind. Der jeweilige Düsenbalken 13 ist achsparallel zur Siebtrommel 6 angeordnet und an seiner der Siebtrommel 6 zugeordneten Unterseite mit einem hier nicht dargestellten Düsenstreifen zum Austritt der Wasserstrahlen 14 versehen. Wie üblich ist die Siebtrommel 6 zum Absaugen des aufgespritzten Wassers unter Saugzug gesetzt, wozu im Inneren der Siebtrommel 6 ein in den Figuren 2 und 3 dargestelltes Saugrohr 1 zentrisch angeordnet ist, das zur Siebtrommel 6 sich erstreckende Saugschlitze X₂ aufweist, denen wiederum die Düsenbalken 13 zugeordnet sind. Auf die Wandung der Siebtrommel 6 ist eine Struktur gebende Musterschale 7 aufgezogen, die mit einem Lochmuster versehen ist. Die Löcher können unterschiedliche Durchmesser aufweisen und auch sonst die verschiedensten Formen annehmen, jedes Muster ist hier denkbar. Wenn nunmehr das Vlies 15 von den Wasserstrahlen 14 getroffen wird, so bewegen sich die Fasern im Bereich der Löcher der Musterschale 7 in diese hinein, und auf den Stegen zwischen den Löchern wird das Vlies 15 vernadelt und verfestigt. Die Bewegung der Fasern in die Löcher der dünnen Struktur gebenden Musterschale 7 ist aber begrenzt, da unterhalb der Musterschale 7 ein feines Siebgewebe der Siebtrommel 6 angeordnet ist. Es dient normalerweise als Unterlage für ein glatt zu vernadelndes Vlies. Das aufgespritzte Wasser wird innerhalb der Siebtrommel 6 abgesaugt. Die Fasern aber bleiben auf der Siebtrommel 6 liegen und werden von den Wasserstrahlen 14 auch dort vernadelt und somit verfestigt. So entsteht einseitig ein plastisches Muster in einem vollflächig verfestigten Vlies 15.

In Figur 2 ist ein Längsschnitt durch die Mittelachse der Siebtrommel 6 aus Figur 1, umfassend einen porösen Trommelbereich 6', und die Struktur gebende Musterschale 7, umfassend einen Struktur gebenden porösen Bereich 7', dargestellt. Die Siebtrommel 6 ist über ein hinteres Lager 2 sowie einen zugehörigen hinteren Lagerflansch 4 auf dem Saugrohr 1 und über ein vorderes Lager 3 sowie einen zugehörigen vorderen Lagerflansch 5 auf einem Lagerzapfen 11 des Saugrohrs 1 gelagert. Die Struktur gebende Musterschale 7 ist auf die Siebtrommel 6 geschoben, und ein Gegenverzahnungsring 9 der Musterschale 7 ist in einen Verzahnungsring 8 auf der Rückseite der Siebtrommel 6 eingerastet. Auf diese Weise ist die Musterschale 7 verdrehungsstabil auf der Siebtrommel 6 gelagert. Ein Flansch 12 der Musterschale 7 wird mit Befestigungsschrauben 10 auf der Bedienseite der Siebtrommel 6 angeschraubt, so dass die Musterschale 7 auch in axialer Richtung gegenüber der Siebtrommel 6 fixiert ist. Damit ist die Musterschale 7 schnell und sicher befestigt. Bei der Struktur gebenden Musterschale 7 handelt es sich beispielsweise um eine mikroporöse glatte Schale oder eine Schale mit einem beliebigem Gewebe aus Metall oder Kunststoff, die jeweils einen Struktur gebenden porösen Bereich 7' aufweisen. Es bezeichnet X₁ die Wasserstrahlbreite des oberhalb der Siebtrommel 6 sitzenden Wasserbalkens, und X₂ bezeichnet die Länge des Saugschlitzes im Saugrohr 1 zum Absaugen des Wassers der Wasserstrahlen 14.

In Figur 3 ist in einer Seitenansicht die Siebtrommel 6 und die daran befestigte Musterschale 7 dargestellt. In dieser Figur ist besonders deutlich erkennbar, wie der Verzahnungsring 8 der Siebtrommel 6 und der Gegenverzahnungsring 9 der Musterschale 7 ineinander greifen und somit eine Verdrehung von Siebtrommel 6 und Musterschale 7 gegeneinander verhindern.

### Bezugszeichenliste

- 1: Saugrohr
- 2: hinteres Lager
- 3: vorderes Lager
- 4: hinterer Lagerflansch
- 5: vorderer Lagerflansch
- 6: Siebtrommel
- 6': poröser Trommelbereich
- 7: Struktur gebende Musterschale
- 7': Struktur gebender poröser Bereich der Musterschale
- 8: Verzahnungsring
- 9: Gegenverzahnungsring
- 10: Befestigungsschrauben
- 11: Lagerzapfen
- 12: Flansch
- 13: Düsenbalken
- 14: Wasserstrahlen
- 15: Vlies
- X₁: Wasserstrahlbreite des oberhalb der Trommel sitzenden Wasserbalkens
- X₂: Länge des Saugschlitz im Saugrohr

## Patentansprüche

1. Vorrichtung zur Musterung und Verfestigung eines als Warenbahn ausgebildeten Vlieses (15), umfassen deine Siebtrommel (6) und eine die Siebtrommel (6) von außen umschließende Musterschale (7), wobei die auf der Musterschale (7) befindlichen Fasern des Vlieses (15) entsprechend dem durch die Löcher der Musterschale (7) gebildeten Muster mittels energiereicher Wasserstrahlen (14) oder durch Luftströmung vernadelt und verfestigt werden, **dadurch gekennzeichnet, dass** die Musterschale (7) und die Siebtrommel (6) durch schnell lösbare mechanische Mittel (8, 9, 10) miteinander verbunden sind und formschlüssig ineinander greifende Mittel (8, 9) aufweisen, die eine Verdrehung von Musterschale (7) und Siebtrommel (6) gegeneinander verhindern.

2. Vorrichtung nach Anspruch 1, **dadurch gekennzeichnet, dass** die Musterschale (7) einen Gegenverzahnungsring (9) und die Siebtrommel (6) einen Verzahnungsring (8) aufweisen, die formschlüssig so ineinander greifen, dass eine Verdrehung von Musterschale (7) und Siebtrommel (6) gegeneinander verhindert wird.

3. Vorrichtung nach einem der vorhergehenden Ansprüche, **dadurch gekennzeichnet, dass** Befestigungsschrauben (10) auf der Bedienseite der Siebtrommel (6) so angeordnet sind, dass eine axiale Verschiebung der Musterschale (7) gegenüber der Siebtrommel (6) verhindert wird.

## Claims

1. Device for patterning and consolidating a nonwoven (15) in the form of an endless fabric, comprising a sieve drum (6) and a patterning sleeve (7) enclosing the sieve drum (6) on the outside, the fibers of the nonwoven (15) that are present on the patterning sleeve (7) being needled and consolidated by means of high-energy water jets (14) or by means of airflow in a manner corresponding to the pattern formed by the holes in the patterning sleeve (7), **characterized in that** the patterning sleeve (7) and the sieve drum (6) are connected with each other by quickly releasable mechanical means (8, 9, 10) and comprise form-fittingly engaging means (8, 9) that prevent the patterning sleeve (7) and the sieve drum (6) from twisting relative to each other.

2. Device of claim 1, **characterized in that** the patterning sleeve (7) comprises a counter gear ring (9) and the sieve drum (6) comprises a gear ring (8), which engage in a form-fitting manner such that the patterning sleeve (7) and the sieve drum (6) are prevented from being twisting relative to each other.

3. Device of one of the preceding claims, **characterized in that** fastening screws (10) are arranged such on the operator side of the sieve drum (6) that an axial displacement of the patterning sleeve (7) relative to the sieve drum (6) is prevented.

## Revendications

1. Dispositif pour créer un motif et pour consolider un non-tissé (15) constitué en tant que bande de matériau, comprenant un tambour perforé (6) et un manchon (7) entourant de l'extérieur le tambour perforé (6), les fibres du non-tissé (15) situées sur le manchon (7) étant aiguilletées et consolidées conformément au motif formé par les trous du manchon (7) au moyen d'énergiques jets d'eau (14) ou par flux d'air, **caractérisé en ce que** le manchon (7) et le tambour perforé (6) sont raccordés l'un à l'autre par des moyens (8, 9, 10) mécaniques rapidement détachables et présentent des moyens (8, 9) qui engrènent mutuellement par liaison de forme et empêchent une torsion du manchon (7) et du tambour perforé (6) l'un par rapport à l'autre.

2. Dispositif selon la revendication 1, **caractérisé en ce que** le manchon (7) présente une bague de contre-engrenage (9) et le tambour perforé (6) présente une bague d'engrenage (8), les deux bagues engrenant l'une avec l'autre mutuellement par liaison de forme de façon à empêcher une torsion du manchon (7) et du tambour perforé (6) l'un par rapport à l'autre.

3. Dispositif selon une des revendications précédentes, **caractérisé en ce que** des vis de fixation (10) sont disposées sur le côté de commande du tambour perforé (6) de façon à empêcher un déplacement axial du manchon (7) par rapport au tambour perforé (6).
